# EUROPEAN PATENT APPLICATION

(11) **EP 0 718 085 A1**
(43) Date of publication of application: **26.06.1996**
(21) Application number: 95120048.4
(22) Date of filing: 19.12.1995
(51) Int. Cl.: B29C 45/44, B29C 33/52

(54) **Process for the manufacture of hollow bodies of plastics material and installation which implements the process**

(30) Priority: 21.12.1994 IT BO940560
(71) Applicant: MAGNETI MARELLI S.p.A., I-20145 Milano (IT)
(72) Inventor: Moschini, Renzo, I-40127 Bologna (IT); Poggi, Stefano, I-40010 Sala Bolognese (IT)
(74) Representative: Jorio, Paolo

(57) **Abstract**

The process permits the manufacture of hollow bodies of plastics material with reduced thicknesses and of one piece. The process comprises :
cold-compacting a pre-determined quantity of alkaline salts in a first mould for the purpose of forming at least one core;
inserting the core into a second mould;
injecting the plastics material in liquid phase into the second mould; and
when the plastics material is solid, wetting the manufactured article with water in order to release the core.

## Description

The present invention relates to a process for the manufacture of hollow bodies of plastics material and in particular of components for the automobile industry.

The present invention also relates to an installation which implements the above-mentioned process.

As is known, current processes for the manufacture of hollow bodies of plastics material provide for the use of at least two possible technologies.

The first technology comprises traditional injection moulding and provides for the production of a mould, the production of cores and the insertion of such cores into the mould, the injection of the plastics material inside the mould and finally the removal of the cores. This technology has the advantage of obtaining an article with reduced thicknesses but unfortunately the above-mentioned technology has the disadvantage of obtaining articles defined by two shells; because of this, subsequent to the injection phase, the two shells have to be assembled (usually by welding) with a consequent increase in the costs of labour and the machines used for the assembly work. Finally it should be noted that articles defined by two shells have to be produced with enlarged edges along which the welding takes place. In any event, an article defined by two shells can present problems of leak-tightness in the course of time.

The second technology is similar to the first technology but with the difference that disposable cores comprising low-melting metal elements are used. Articles of one piece and with reduced thickness are obtained with this technology. Unfortunately the use of this technology requires a high-cost installation and high investment is therefore necessary. The costs of running this installation are also high. The high cost of the installation is due in particular to the machines with which the fusible cores are produced and to the operations involved in recovering the molten material of such cores.

It should be emphasized that the first technology described above provides for the removal of the core and hence provides for configurations of the article which permit such removal. Essentially, with the above-mentioned technology there are limits to the configurations which are desired to be obtained and it is not, for example, possible to obtain undercuts, so that trimming work is sometimes necessary, with all the costs that such work involves.

The object of the invention is to produce a process for the manufacture of hollow bodies of plastics material which does not have the above-mentioned disadvantages.

A second object of the invention is to produce an installation which implements the above-mentioned process.

A further object of the invention is to produce a hollow body of plastics material manufactured with the above-mentioned process.

According to the invention a process is produced for the manufacture of hollow bodies of plastics material characterized in that it comprises :
cold-compacting a pre-determined quantity of alkaline salts in a first mould for the purpose of forming at least one core;
inserting the said core into a second mould;
injecting the plastics material in liquid phase into the said second mould; and
when the plastics material is solid, wetting the manufactured article with water in order to release the said core.

According to the invention an installation is also produced for the manufacture of hollow bodies of plastics material characterized in that it comprises :
a first station for cold-compacting alkaline salts inside a first metal mould so as to obtain a solid core;
a second station for injecting plastics material in liquid phase into a second mould in which the said core is inserted; and
a third station for washing the final article with water in order to release the said core.

According to the invention a manifold for supplying exhaust air to an endothermic engine of a vehicle is also produced which is characterized in that it is produced with a process which provides for the injection of plastics material in liquid phase into a mould in which a core in compacted alkaline salt is present.

Finally, according to the invention a throttle-valved body for regulating exhaust air towards an endothermic engine of a vehicle is produced, characterized in that it is produced with a process which provides for the injection of plastics material in liquid phase into a mould in which a core in compacted alkaline salt is present.

For an improved understanding of the invention a preferred embodiment will now be described, purely by way of a non-exhaustive example, with reference to the accompanying drawings in which :
Fig. 1 is a block diagram of an installation produced according to the specifications of the invention;
Fig. 2 is a front view of a first body produced with the process to which the invention relates;
Fig. 3 is a cross-section through III-III of Fig. 2;
Fig. 4 is a partially sectioned view of a second body produced with the process to which the invention relates; and
Figs. 5, 6 and 7 are partial views of the body in Fig. 4, in one part it is configured in a different way from the part illustrated in Fig. 4.

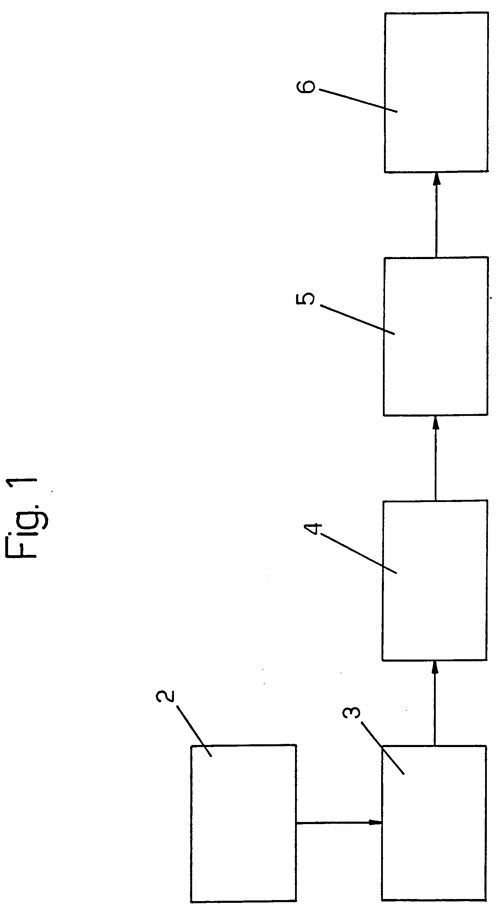

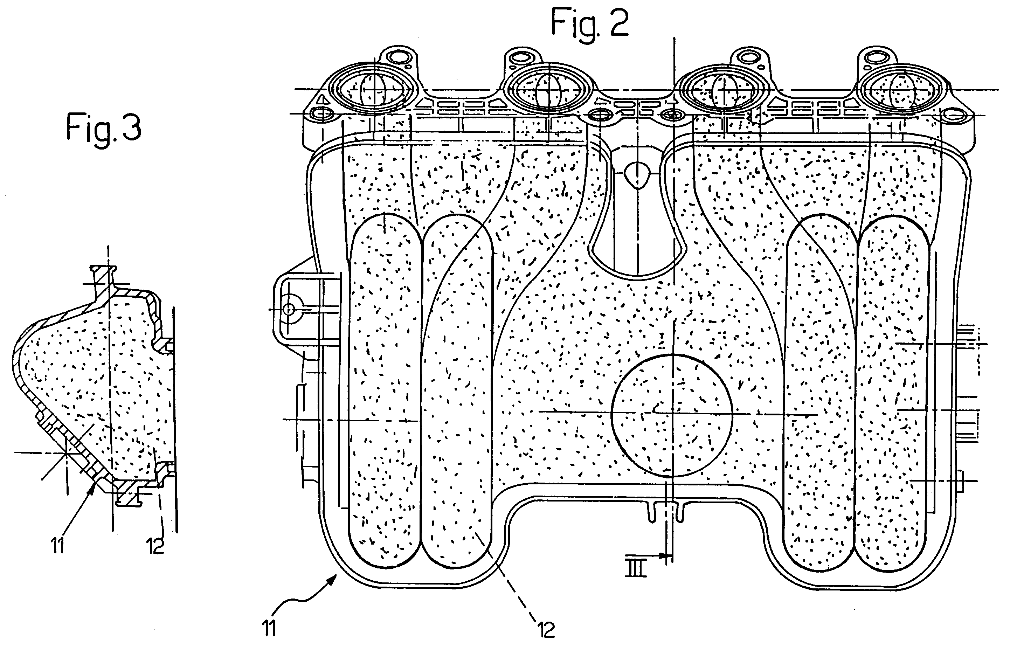

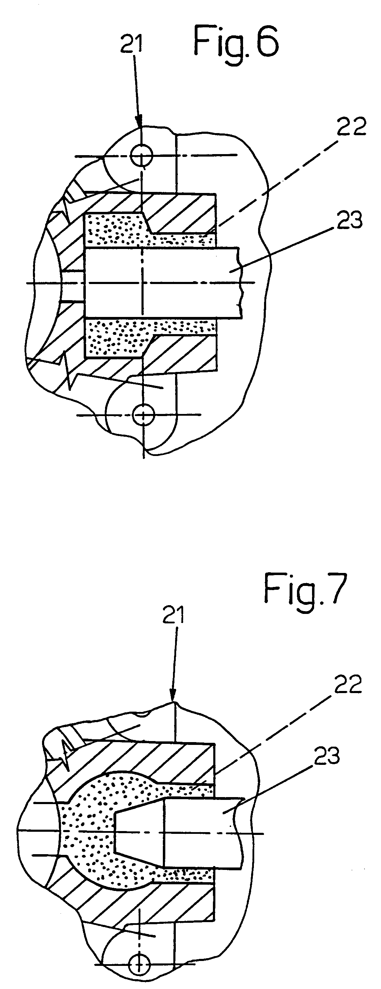

In the illustration in Fig. 1, 1 denotes in its entirety an installation for the manufacture of hollow bodies of plastics material and in particular of components for the automobile industry like those illustrated in Figs. 2 to 7.

The installation 1 comprises :
a station 2 in which a pre-determined quantity of alkaline salts is dehydrated by means of a dehydration machine of known type and not therefore shown;
a station 3 in which, by means of a press (not shown) of known type, one or more solid cores are obtained by means of the cold-compaction of alkaline salts inside a first metal mould which is not shown;
a station 4 in which, by means of a furnace (not shown) of known type and when the cores have been removed from the first mould, the cores produced in station 3 undergo sintering treatment at 200-300 °C;
a station 5 in which the above-mentioned cores are inserted in a second mould which is not shown and in which the plastics material in liquid phase is injected into the second mould; and
a station 6 in which, when the plastics material solidifies, the second mould is opened and the manufactured article is wetted with water in order to release the cores in salt.

The second mould is wholly similar to the mould used in the second technology described above.

The process achieved according to the specifications of the invention comprises :
dehydrating a pre-determined quantity of alkaline salts;
cold-compacting the above-mentioned quantity of salts in a first mould in order to form cores;
carrying out a sintering treatment at 200-300 °C of the cores when they have been removed from the first mould;
inserting the above-mentioned cores into a second mould;
injecting the plastics material in liquid phase into the second mould; and
when the plastics material is solid, wetting the manufactured article with water in order to release the cores in salt.

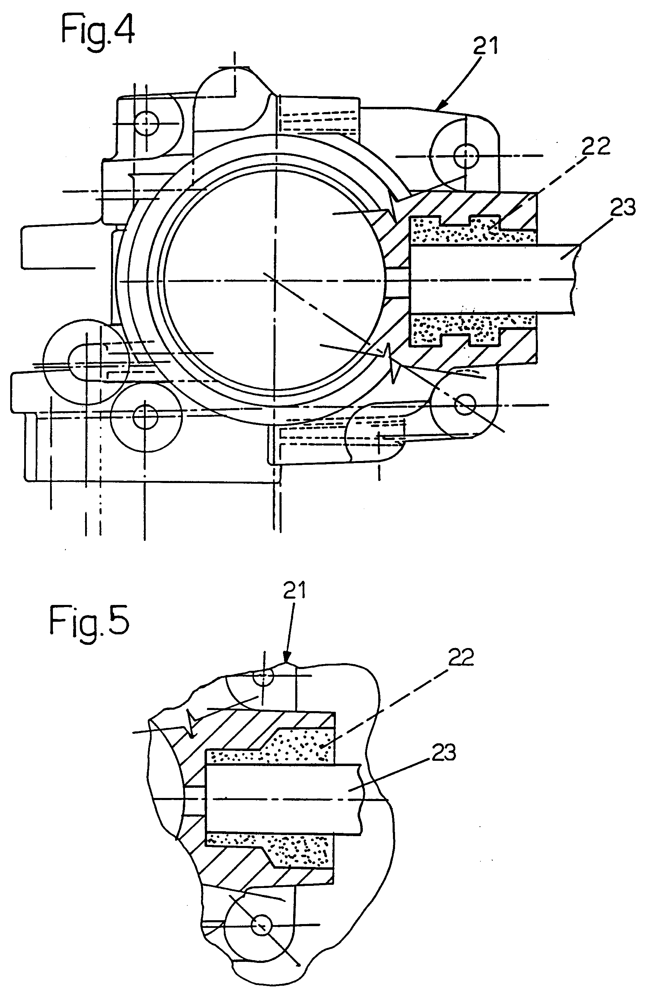

In station 3 a portion of the salt is compacted around a metal element which is used to anchor the cores to the second mould. Essentially, as is known, it is necessary to equip the cavity of the second mould with orifices (core anchoring zones) so that these cores remain immobile in the course of the injection phase. The compaction of the salt in the first mould usually takes place at pressures not less than 1000 bars. For some complex configurations of the core in salt, such as that shown in Fig. 4, in view of the fact that the penetration pressure of the salt is not distributed uniformly, it is necessary for the compaction pressure to be applied from several zones by using presses with multiple plungers or presses with radial action, presses which are, however, of known type. The purpose of the sintering phase is to render the compaction of the salt more homogeneous. The process described above may comprise a further phase in the course of which the water used to wet the article is collected and in the course of which the salt is recovered from that water.

Figs. 2 and 3 show a manifold 11 for supplying an endothermic engine, which is not shown, of a vehicle, which is not shown, with exhaust air. The manifold 11 which is illustrated is located at the outlet of the second mould and therefore still has a core 12 in alkaline salt present inside it. As can be seen, the manifold 11 comprises a one-piece article of reduced thickness.

Fig. 4 shows a throttle-valved body 21 for the regulation of the exhaust air of an endothermic engine which is not shown of a vehicle which is not shown. The throttle-valved body 21 which is illustrated is located at the outlet of the second mould and therefore still has a core 22 in alkaline salt present inside it. The core 22 has been compacted around a metal element 23 which, as already indicated, is used to anchor the core 22 to the second mould. As examples, Figs. 4 to 7 show various configurations which the core 22 may receive, configurations which may give rise to cavities with undercuts inside the body 21. The body 21 illustrated in Figs. 4 to 7 also comprises a one-piece article of reduced thickness.

The advantages achieved by means of the invention will be evident from the above description.

In particular a process and an installation for the manufacture of hollow bodies have been achieved, using disposable cores in salt which can therefore be removed by means of a simple washing of the final article with water. In this way it is possible to produce one-piece articles and therefore articles which do not need welding to assemble shells. The use of disposable cores in salt enables cavities to be produced in the bodies in which undercuts are defined which cannot currently be produced with disposable and non-disposable cores of known type. As a result it is possible to produce bodies which do not require further trimming work, with all the advantages which accrue from this.

With regard to the installation which uses fusible cores, the construction of the installation 1 involves much lower investment and also reduced running costs.

Finally it will be clear that modifications to and variants of the process and the installation 1 which have been described and illustrated can be introduced without thereby departing from the scope of the invention.

In particular the alkaline salt, to be compacted to produce the cores, can comprise ordinary fine cooking salt which, as is known, is easy to find commercially and above all is inexpensive.

## Claims

1. Process for the manufacture of hollow bodies of plastics material characterized in that it comprises :
cold-compacting a pre-determined quantity of alkaline salts in a first mould for the purpose of forming at least one core;
inserting the said core into a second mould;
injecting the plastics material in liquid phase into the said second mould; and
when the plastics material is solid, wetting the manufactured article with water in order to release the said core.

2. Process according to Claim 1, characterized in that it comprises a phase, preceding the said compaction phase, in which the said pre-determined quantity of alkaline salts is dehydrated.

3. Process according to Claim 1 and/or 2, characterized in that it comprises, downstream of the said compaction phase, an intermediate phase in the course of which a sintering treatment at 200-300 °C of the said core is carried out once it has been removed from the said first mould.

4. Process according to at least one of the preceding Claims, characterized in that it comprises, downstream of the said wetting phase of the said article, a phase in which the alkaline salt is recovered from the water used for the bath.

5. Process according to at least one of the preceding Claims, characterized in that the salt is compacted around a metal support.

6. Process according to at least one of the preceding Claims, characterized in that the said article is a one-piece article.

7. Installation for the manufacture of hollow bodies of plastics material characterized in that it comprises :
a first station (3) for cold-compacting alkaline salts inside a first metal mould so as to obtain a solid core;
a second station (5) for injecting plastics material in liquid phase into a second mould in which the said core is inserted; and
a third station (6) for washing the final article with water in order to release the said core.

8. Installation according to Claim 7, characterized in that it comprises a fourth station (2), upstream of the said first station (3), for dehydrating the said pre-determined quantity of alkaline salts.

9. Installation according to Claim 7 and/or 8, characterized in that it comprises, between the said first station (3) and the said second station (5), a fifth station (4) for sintering the said core at 200-300 °C.

10. Installation according to at least one of Claims 7 to 9, characterized in that it comprises, downstream of the said third station (6), a sixth station for recovering the alkaline salt from the water.

11. Installation according to at least one of Claims 7 to 10, characterized in that it comprises a metal support around which the compaction of the salt takes place.

12. Installation according to at least one of Claims 7 to 11, characterized in that the said article is a one-piece article.

13. Manifold for supplying exhaust air to an endothermic engine of a vehicle, characterized in that it is produced with a process which provides for the injection of plastics material in liquid phase into a mould in which a core (12) in compacted alkaline salt is present.

14. Manifold according to Claim 13, characterized in that it is of one piece.

15. Throttle-valved body for regulating exhaust air towards an endothermic engine of a vehicle, characterized in that it is produced with a process which provides for the injection of plastics material in liquid phase into a mould in which a core (22) in compacted alkaline salt is present.

16. Throttle-valved body according to Claim 15, characterized in that it is of one piece.
